# EUROPEAN PATENT SPECIFICATION

(11) **EP 2 181 917 B1**
(45) Date of publication and mention of the grant of the patent: **15.08.2012**
(21) Application number: 09156937.6
(22) Date of filing: 31.03.2009
(51) Int. Cl.: B62J 9/00, B62J 1/28

(54) **Storage box**
Aufbewahrungsbehälter
Boîte de stockage

(30) Priority: 31.10.2008 JP 2008281946
(43) Date of publication of application: 05.05.2010
(73) Proprietor: Honda Motor Co., Ltd., Minato-ku Tokyo 107-8556 (JP)
(72) Inventor: Kawai, Kenji, Saitama 352-8589 (JP)
(74) Representative: Prechtel, Jörg

(56) References cited:
- DE-A1-102006 046 005
- JP-A- 60 018 469
- JP-A- 61 226 382
- JP-A- 2000 128 043
- US-A- 4 260 085
- US-A- 4 549 629
- US-A- 4 690 237
- US-A- 4 915 187
- US-A- 5 025 883
- US-B1- 6 332 639

## Description

### TECHNICAL FIELD

The present invention relates to a storage box, and more particularly, to the one that is to be mounted on a rearward of a saddle riding type vehicle and is provided with a backrest.

### BACKGROUND ART

Hitherto, as a storage box mounted on this kind of a saddle riding type vehicle, US 6,332,639 B1 or JP 2000-168655 , for example, discloses a rear trunk comprising a trunk body and a lid. This rear trunk is mounted on a rearward of a tandem seat, being a rear section of a large-size two-wheeled motor vehicle as a saddle riding type vehicle and is mounted with a backrest on its upper front side. In this conventional art, however, no specific mounting means of the backrest is described. The preamble of claim 1 is based on this document.

Further, a tail box mounted with a backrest on its front side is disclosed in Japanese unexamined patent application publication No. H5-221358 , for example. This backrest is mounted on the tail box in such a manner that a hole is formed on a forward end wall of the tail box and a rubber bush is inserted into the hole and then the backrest is mounted on the tail box by inserting a protrusion provided on a rear surface of the backrest into the rubber bush.

### DISCLOSURE OF THE INVENTION

### Problems to be solved by the invention

According to the latter conventional art, however, the forward end wall of the tail box is formed to have a vertical surface and besides the hole is formed at the forward end wall. Hence, it has been a problem that rainwater infiltrates from the hole into the tail box due to repeated use over the years.

### Means for solving the problem

With the view to the problem described above, it is an object of the present invention to provide a storage box which can prevent rain infiltration.

A first aspect of the present invention is a storage box, for being mounted on a rearward of a seat on a saddle riding type vehicle, which is provided with:
a base member with an opening,
a lid for opening and closing the opening,
a hinge for pivotably connecting the lid to the base member,
a lock member for holding the lid with the lid having closed the opening, and
a backrest attached to one surface of the lid,
characterized in that
the storage box is provided with a cover body for covering an upper surface of the lid,
the backrest is bonded to the one surface of the lid by using an adhesive member, and
the cover body is joined to the backrest at a joining section provided at one end of the cover body, while the cover body is fixed to the upper surface of the lid.

A second aspect of the present invention is a storage box in which an upper end surface of the backrest and an upper surface of a front portion of the cover are made flush with each other.

A third aspect of the present invention is a storage box in which the lid is formed in an arch shape whose upper surface gets gently convex upwards and the cover body covers a coupling portion coupling the lid and the cover mechanically together.

### Effects of the invention

According to the storage box of the first aspect of the present invention, a hole for fixing the backrest to the lid does not need to be formed at the forward end wall of the lid. Hence, rainwater can be prevented from infiltrating from the forward end wall of the lid into the storage box.

According to the storage box of the second aspect of the present invention, the upper end surface of the backrest and the upper surface of the front portion of the cover are integrally provided. Hence, rainwater can be prevented from infiltrating into a portion where the backrest is bonded to the lid to thereby restrain deterioration of the adhesive member, permitting the bonded condition to be kept stably over a prolonged period of time.

According to the storage box of the third aspect of the invention, the coupling portion is provided inside the cover. Hence, rainwater can be prevented from infiltrating into the storage box.

### BRIEF DESCRIPTION OF THE INVENTION

FIG. 1 is a longitudinal sectional view showing an overall structure of a storage box according to the present embodiment.

FIG. 2 is a perspective view showing a structure of a lid according to the present embodiment.

FIG. 3 is a longitudinal sectional view showing a structure of a backrest according to the present embodiment.

FIG. 4 is a rear perspective view showing a structure of a cover body according to the present embodiment.

FIG. 5 is a longitudinal sectional view showing a coupling portion of the lid and a top cover according to the present embodiment.

FIG. 6 is a partial cross-sectional view showing a structure of a joining section of the backrest and a cover body according to the present embodiment.

FIG. 7 is a perspective view showing a structure of a decorative board according to the present embodiment.

FIG. 8 is a longitudinal sectional view showing a coupling portion of the lid and decorative board according to the present embodiment.

FIG. 9 is a longitudinal sectional view showing a structure of a lock member according to the present embodiment.

FIG. 10 is a front view showing the structure of the lock member, in which (a) shows the lock member in a locked condition and (b) shows the same in an unlocked condition.

FIG. 11 is a perspective view showing positional relationship between a regulating rib and a retainer according to the present embodiment.

FIG. 12 is a longitudinal sectional view showing the lock member in a practical use, where a hooking body is allowed to slide downwards to disengage the hooking portion from a hooking receiving portion.

### BEST MODE FOR CARRYING OUT THE INVENTION

Hereunder is a detailed description of a preferred embodiment of the present invention with reference to the accompanying drawings.

### (1) Overall structure

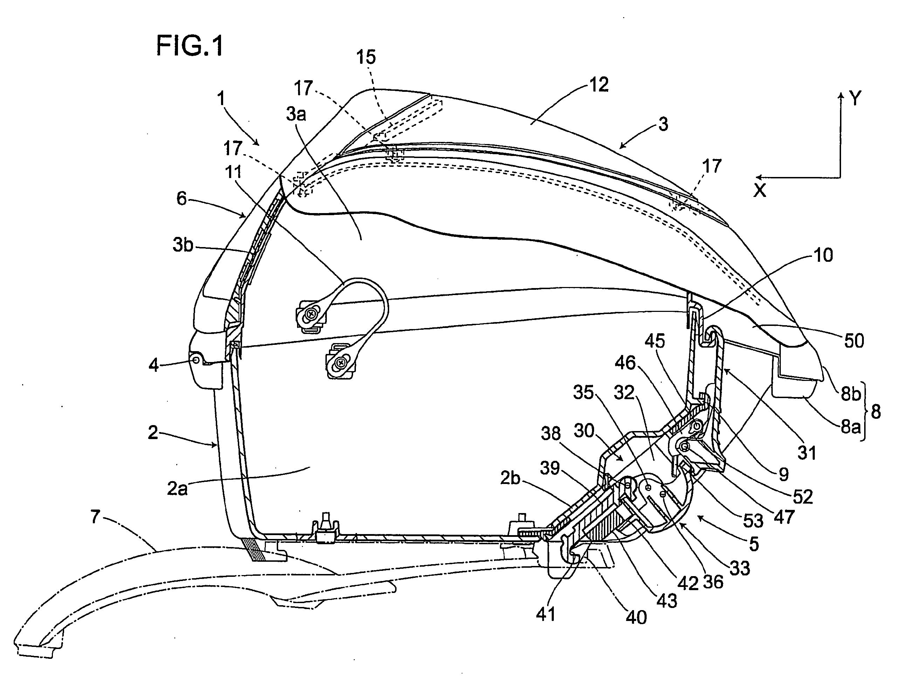

A storage box shown in FIG. 1 is provided with a base member 2, a lid 3, a hinge 4, a lock member 5 and a backrest 6. The storage box can be mounted detachably on a carrier 7 provided in the vicinity of a rear seat of a saddle riding type vehicle not shown. A carrying handle 8 is formed integrally with a rear end of the storage box 1. In the following description, a travelling direction of vehicle as denoted by an arrow X in Fig.1 is a front, an opposite direction to the traveling direction X is a rear, a vertically upward direction Y is an upside and an opposite direction to the vertically upward direction Y is an under side, respectively.

The base member 2 comprises a boxy member with an opening on its upper portion and a rear end wall 2b of the base member 2 is formed with a lower half 8a of the handle 8. A positioning protrusion 9 is formed in the rear end wall 2b of the base member 2.

The lid 3 is pivotably connected to a forward end of the opening of the base member 2 via the hinge 4 to enable the opening to be left open and close, while the rear end of the opening is formed with an upper half 8b of the handle 8 that is hollow thereinside. A locking hook receiving portion 10 opened upward is formed at a rear end of the lid 3. A sidewall 3a of the lid 3 and a sidewall 2a of the base member 2 are joined to each other by a stopper 11.

Further, the lock member 5 is fixed to the rear end wall 2b of the base member 2 by a screw not shown so that the lid 3 can be held in a closed condition relative to the base member 2. The backrest 6 is provided at a forward end wall 3b defining one surface of the lid 3.

According to the configuration of the above-mentioned respective sections, the storage box 1 is formed of the boxy member divided into upper and lower portions, corresponding to the lid 3 and the base member 2, respectively. One of the upper and lower halves 8b, 8a of the handle 8 is put on top of the other to form the carrying handle 8. Hence, the storage box 1 is held integrally with the saddle riding type vehicle even in its traveling state due to the same being fixed to the carrier 7, while it may be detached from the carrier 7 if needed to allow a user to carry the storage box 1 by holding the carrying handle 8. Further, in the storage box 1, the lid 3 is openable and closable to the base member 2 and the opening angle thereof is limited by the stopper 11.

### (2) Backrest mounting structure

### (A) Structure

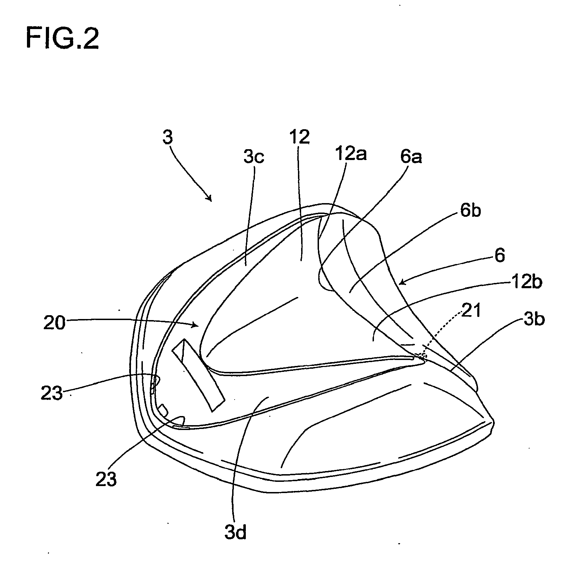

As shown in FIG. 2, an upper surface 3c of the lid 3 inclines gently downwards as it progresses from the forward end to the rear end and besides is formed in an arch-shape whose approximately central portion is convex. Near the center of the upper surface 3c, a cover body 12 is provided so as to conform to the contour of the upper surface 3c. Further, the forward end wall 3b of the lid 3 is formed so as to get gently concave at its central portion as it progresses rearwards, and the backrest is attached thereto. Furthermore, an approximately V-shaped decorative board setting section 3d is formed on the upper surface 3c of the lid 3 in a manner to encompassing the cover 12.

The backrest 6 is attached firmly to the forward end wall 3b of the lid 3 by using an adhesive member not shown, such as an adhesive agent, a double-stick tape or the like. Further, an upper end 6b of the backrest 6 is joined to the upper surface 3c of the lid 3 by the cover body 12 and is fixed thereto in a pressing manner. A rear edge 6a of the upper end 6b of the backrest 6 is formed in an arch or crescent shape which gets gently convex rearwards.

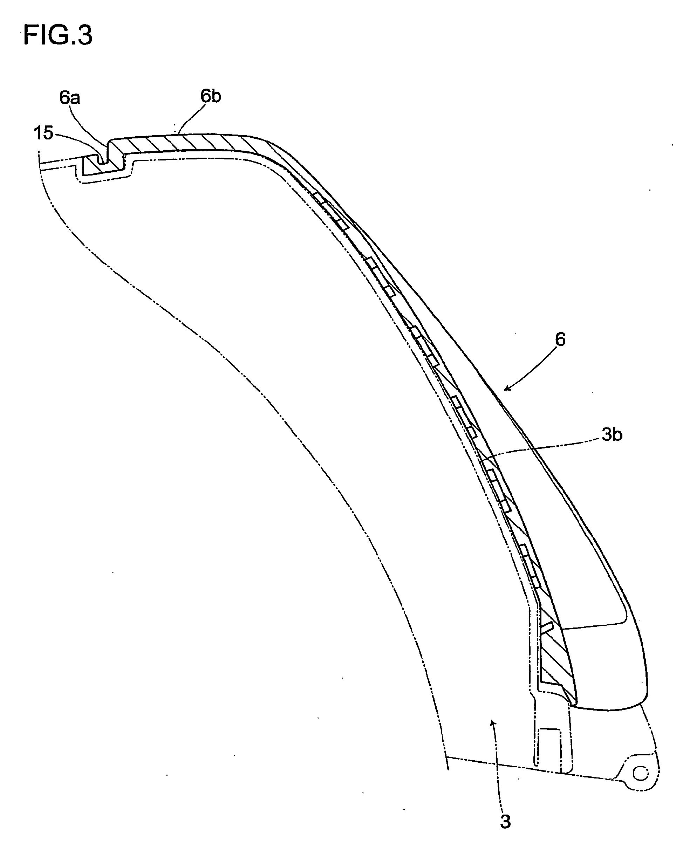

As shown in FIG. 3, the backrest 6 is formed integrally with an engagement groove 15 in the rear edge 6a of the upper end 6b. The engagement groove 15 is formed to have an approximately J-shaped profile which is opened upwards.

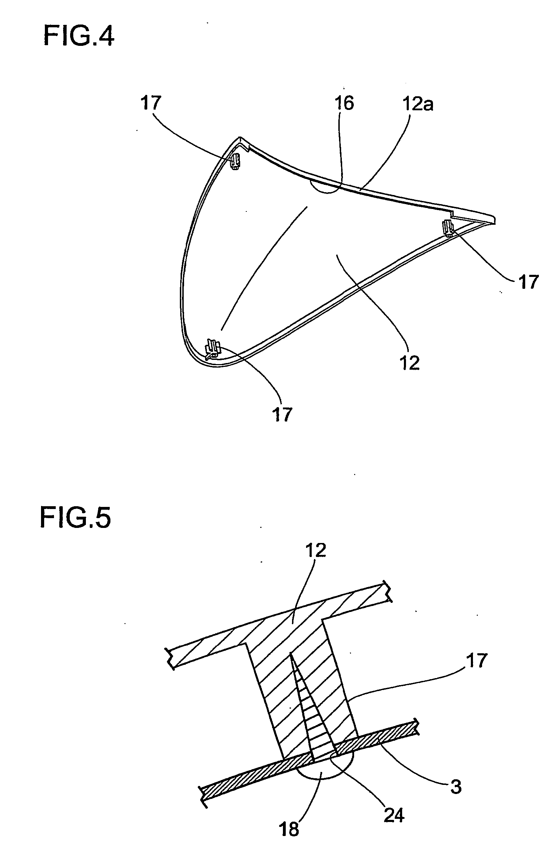

The cover body 12 has, as shown in FIG. 4, an approximately triangular contour and is formed such that the forward end edge 12a thereof gets gently concave at its central portion with respect to its entire width as it progresses rearwards. At the forward end edge 12a, there is provided a ridge 16 which acts as a joining section to engage with the engagement groove 15 of the backrest 6. Further, the cover body 12 is formed with tapped holes 17 each being provided at one of its reverse side corners.

In order to fix the backrest 6 and the cover body 12 to the lid 3, at first, the backrest 6 is attached to the forward end wall 3b of the backrest 6. The engagement groove 15 provided in the rear edge 6a is formed over a range shorter than a length of the backrest 6 in the width direction thereof.

Secondly, the forward end edge 12a of the cover body 12 is allowed to abut against the rear edge 6a of the upper end 6b of the backrest 6 and then the cover body 12 is arranged on the upper surface 3c of the lid 3 so as to cover the upper surface 3c. At this moment, the ridge 16 provided at the forward end edge 12a of the cover body 12 is allowed to engage, from above, with the engagement groove 15 formed at the rear edge 6a of the upper end 6b of the backrest 6. As a result, the forward end edge 12a of the cover body 12 and the rear edge 6a of the upper end 6b of the backrest 6 are joined together.

Further, as shown in FIG. 5, a tapping screw 18 is screwed from a reverse side of the lid 3 into a through hole 24 preliminarily bored in the lid 3 corresponding to the tapped hole 17 and then the tapping screw 18 is screwed into the tapped hole 17 of the cover body 12, forming the coupling portion. Thus, the cover body 12 is fixed to the upper surface 3c of the lid 3. As a result, the backrest 6 is fixed to the lid 3 so that the engagement groove 15 formed at the rear edge 6a of the upper end 6b of the backrest 6 is sandwiched between the forward end edge 12a of the cover body 12 and the upper surface 3c of the lid 3.

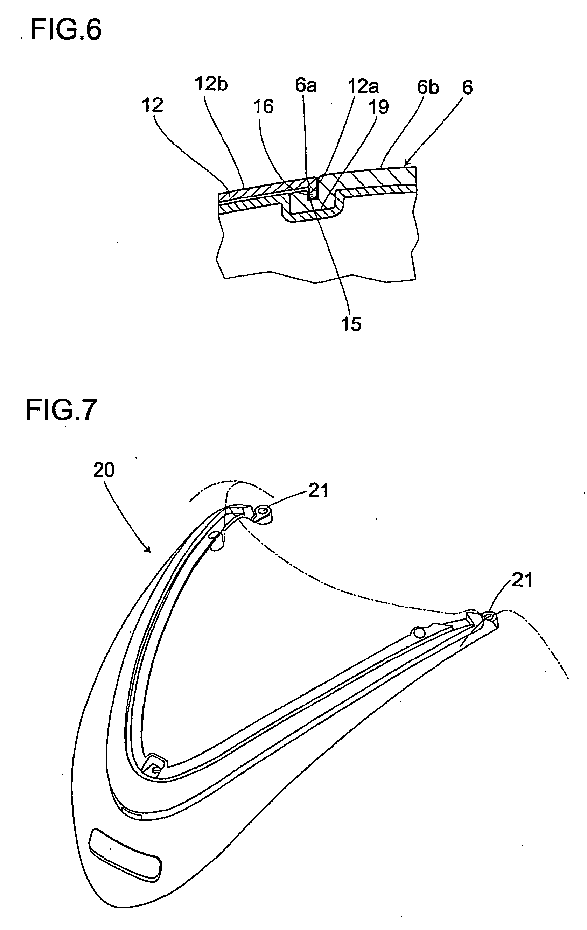

Here, as shown in FIG. 6, a surface of the upper end 6b of the backrest 6 and the upper surface 12b in a front portion of the cover body 12 are flush with each other. Additionally, the portion where the engagement groove 15 of the backrest 6 is formed is inserted into a depression 19 formed in the lid 3 to thereby be positioned there.

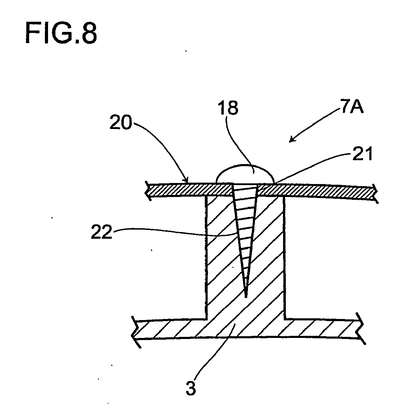

Further, a decorative board 20 shown in FIG. 7 is attached to the decorative board setting section 3d of the lid 3. The decorative board 20 is formed in an approximately V-shape and is provided with through holes 21 at its forward end and is formed with an engagement claw (not shown) at its rear end. In the lid 3, tapped holes 22 (shown in FIG. 8) are preliminarily bored at positions corresponding to the through holes 21 and besides engagement holes 23 (shown in FIG. 2) are provided at positions corresponding to the engagement claws. The decorative board 20 is arranged so as to surround two sides of the cover body 12 except the forward end edge 12a thereof. After having engaged the engagement claws with the engagement holes 23 to fix a rear end of the decorative board 20 to the lid 3 on ahead, the through holes 21 at the forward end are put on the tapped holes 22. Next, by inserting the tapping screws 18 into the tapped holes 22 to screw the tapping screws 18 into the tapped holes 22, the decorative board 20 is fixed to the lid 3 (as shown in FIG. 8). Additionally, the through holes 21 penetrated by the tapping screws 18 are covered with the upper end 6b of the backrest 6.

### (B) Operation and effects

As described above, according to the storage box 1 of the present embodiment, the upper end 6b of the backrest 6 is fixed to the upper surface 3c of the lid 3 by the cover body 12. Hence, the backrest 6 can be fixed to the forward end wall 3b of the lid 3 even by using an adhesive member with weak adhesive force. Accordingly, the storage box 1 enables the forming of the hole for fixing the backrest 6 to the lid 3 at the forward end wall 3b of the lid 3 to be omitted. As a result, rainwater can be prevented from infiltrating from the forward end wall 3b of the lid 3 into the storage box 1.

Thus way, the backrest 6 is fixed to the lid 3 by coupling the adhesive member and the cover body 12 together. Hence, the backrest 6 can be stably fixed even by using an adhesive member with comparatively weak adhesive force and thus manufacturing cost can be curbed and besides the backrest 6 can be easily replaced. As a result, a degree of freedom of choice in design of the backrest as well as easiness in repairing the same can be improved.

Further, in the storage box 1, the surface of the upper end 6b of the backrest 6 and the upper surface 12b in the front portion of the cover body 12 are made flush with each other. Hence, even when a user puts a user's hand, for example, on the storage box 1 mounted on a saddle riding type vehicle, the user's hand can be prevented from being caught by the backrest, enabling the backrest 6 to be more positively prevented from disengaging. According to the storage box 1, therefore, the backrest 6 can be kept fixed to the forward end wall 3b of the lid 3 over a long period of time even by using the adhesive member with comparatively weak adhesive force.

Furthermore, the lid 3 is formed in an arch shape which is convex with its approximately central portion most protruding, and besides this central portion, the tapped holes 17 and the through holes 24 into which the tapping screws 18 screwed into the tapped hole 17 are inserted are covered with the cover body 12. Hence, rainwater is easy to flow toward an outer edge of the storage box 1 and besides the through holes 24 are covered in such manner, thus permitting rainwater to be prevented from infiltrating from the through holes 24 into the storage box 1.

Moreover, the engagement groove 15 provided in the backrest 6 is formed in an approximately J-shape such that it has an upward-opening profile, and besides the ridge 16 of the cover body 12 is allowed to engage therewith. Hence, the backrest 6 and the cover body 12 can be strongly coupled together.

### (3) Lock member

### (A) Structure

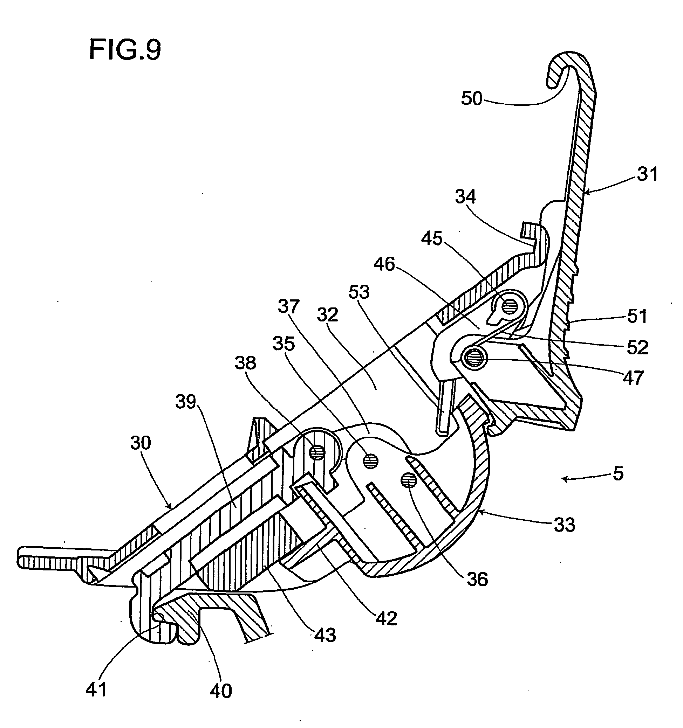

A lock member 5 shown in FIG. 9 is provided with a unit base 30 and a retainer 31, and is fixed to the rear end wall 2b of the base member 2 in the unit base 30.

In the unit base 30, a lock lever 33 is received in a cutout 32 formed in an approximately central portion. Further, the unit base 30 is formed with a positioning hook 34 whose distal end is bent forward. The positioning hook 34 can engage with the positioning protrusion 9 provided in the base member 2. The lock lever 33 is axially supported by a pivot 35 provided in the base unit 30. The pivot 35 is provided so as to define the horizontal direction of the storage box 1 as its longitudinal direction.

Further, the lock lever 33 is provided with a first coupling shaft 36 so that a pair of left and right L-shaped toggle links 37 is axially supported at its one end by the first coupling shaft 36. The other end of the toggle link 37. is axially supported by one end of a hook body 39 via a second coupling shaft 38.

The other end of the hook body 39 is formed with a hooking portion 41 which detachably engages with a hook receiving portion 40 formed in the carrier 7. The first and second coupling shafts 36, 38 are both provided in parallel with the pivot 35.

Consequently, the lock lever 33 rotates about a rotating center of the pivot 35 and thereby can slide the hook body 39 up and down. Further, at a lower end of the lock lever 33, as shown in FIG. 9, there is provided a regulation stopper 42 which regulates clockwise rotating. The regulation stopper 42 abuts against an abutting surface 43 formed in the unit base 30, regulating a rotating movement of the lock lever 33.

In FIG. 9, when the lock lever 33 is rotated clockwise, for example, (as illustrated in FIG. 9), the hook body 39 is allowed to slide upward to engage the hooking portion 41 with the hook receiving portion 40, permitting the storage box 1 to be fixed to the carrier 7. On the other hand, when the lock lever 33 is rotated counterclockwise, the hook body 39 is allowed to slide downwards. Hence, the hooking portion 41 and the hook receiving portion 40 are allowed to disengage with each other, thereby enabling the storage box 1 to disengage from the carrier 7.

Further, the unit base 30 is provided with a third coupling shaft 45, to which one ends of a pair of left and right links 46 are axially supported. The other ends of the links 46 are each axially supported to a fourth coupling shaft 47 provided in the retainer 31. The third coupling shaft 45 and the fourth coupling shaft 47 are arranged in parallel with the pivot 35. As a result, the retainer 31 can rotate around the rotating center of the third coupling shaft 45.

The retainer 31 includes a locking hook 50 formed at its upper end and a slip stopper 51 formed on its reverse side surface. The locking hook 50 is formed in a downward-bent shape and reaches a hollow portion of the carrying handle 8. With the lid 3 being closed, the locking hook 50 can be locked relative to the locking hook receiving portion 10 provided at the rear end of the lid 3.

Further, the retainer 31 is energized rearwards against the unit base 30 by an elastic body. In the present embodiment, a torsion coil spring 52 acting as such elastic body is mounted on the third coupling shaft 45. One end of the torsion coil spring 52 is hooked onto the fourth coupling shaft 47, while the other end thereof abuts against the reverse side of the retainer 31.

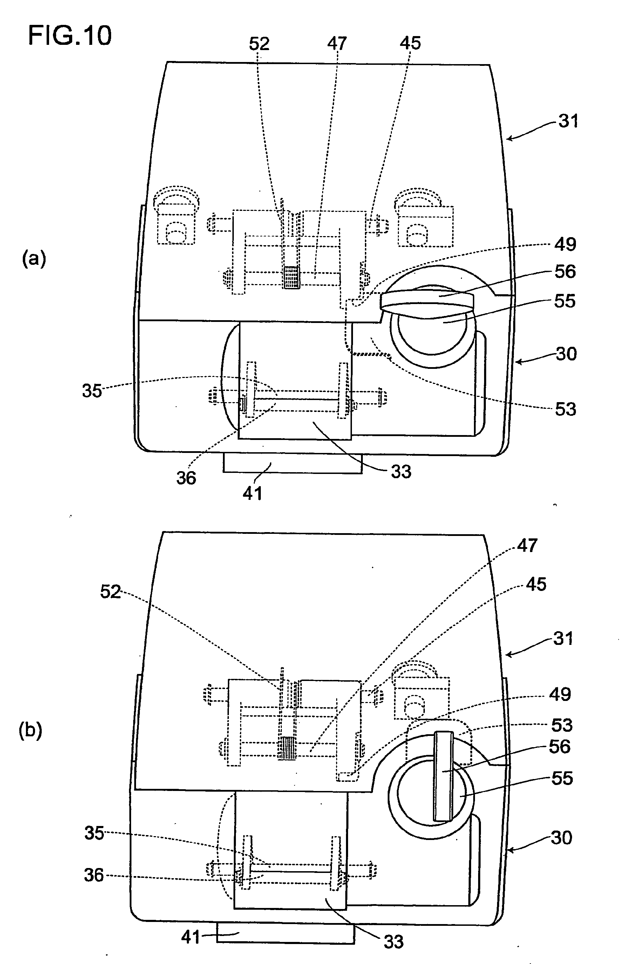

In FIG. 9, the retainer 31 and the lock lever 33 are regulated in rotating motion by a lock piece 53. The lock piece 33 is designed to be able to retain a position of the lock lever 33 where the hooking portion 41 is hooked onto the hook receiving portion 40 as well as a position of the retainer 31 where the locking hook 50 is locked relative to the locking hook receiving portion 10. According to the present embodiment, by inserting the lock piece 53 into the upper end of the lock lever 33 and a groove 49 (shown in FIG. 10) provided in the link 46, the lock lever 33 and the retainer 31 are regulated in their rotating motions.

As shown in FIG. 10, the unit base 30 is provided with a cylinder-lock 55, which is arranged with a key hole faced to an obverse side of the lock lever 33 on a lateral side of the cutout 32. In the cylinder-lock 55, the lock piece 53 can be rotated by a key inserted into the key hole between a locked position and an unlocked position.

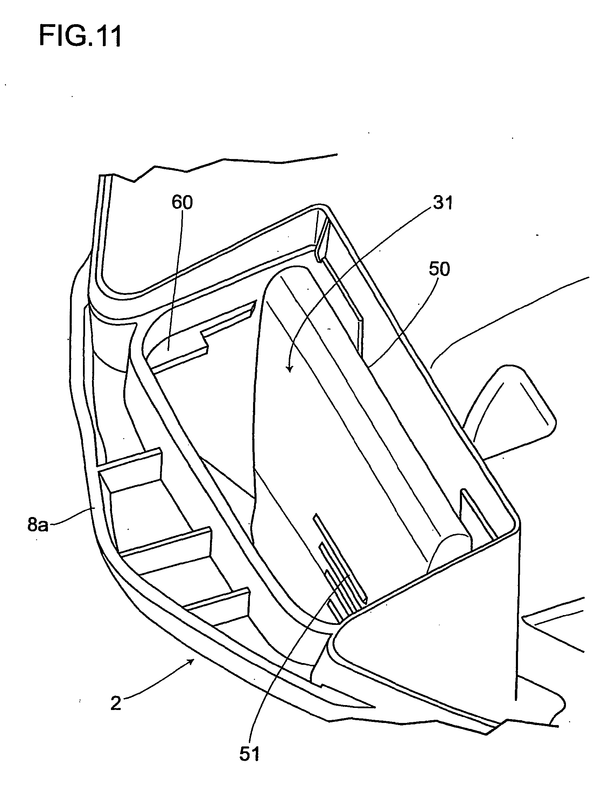

Further, as shown in FIG. 11, a regulating rib 60 is provided in a hollow portion inside the lower half 8a of the handle 8 of the base member 2. The regulating rib 60 is formed in a manner protruding from the lateral side of the hollow portion to an inner side thereof. The regulating rib 60, with the lid 3 being opened, can regulate a tilting position of the retainer 31 energized rearwards by the torsion coil spring 52. The wording: "tilting position of the retainer 31" means a position where the locking hook 50 of the retainer 31 is allowed to engage with the locking hook receiving portion 10 so that the lid 3 can be brought in a closed condition only by a user's simple action to move the slide stopper 51 so as to be slid downwards.

### (B) Operation and effects

According to the lock member 5 thus structured, the lock lever 33, as shown in FIG. 9, is allowed to rotate clockwise until the regulation stopper 42 abuts against the abutting surface 43 to be fixed to the carrier 7 and besides the retainer 31 is allowed to move downwards to maintain a closed condition of the lid 3. Further, the lock piece 53 is inserted into the upper end of the lock lever 33 and the groove 49 provided in the link 46, using the key 56, whereby the rotating motions of the lock lever 33 and retainer 31 are regulated to lock the storage box 1 in the above condition, which is called a locked condition.

Thus, in the present embodiment, the lock piece 53 is inserted into the upper end of the lock lever 33 and the groove 49 provided in the link 46 using the key 56 to regulate the lock lever 33 and the retainer 31 in rotating motion. Hence, the lock lever 33 and the retainer 31 can be locked at the same time by one cylinder-lock 55 provided in the unit base 30.

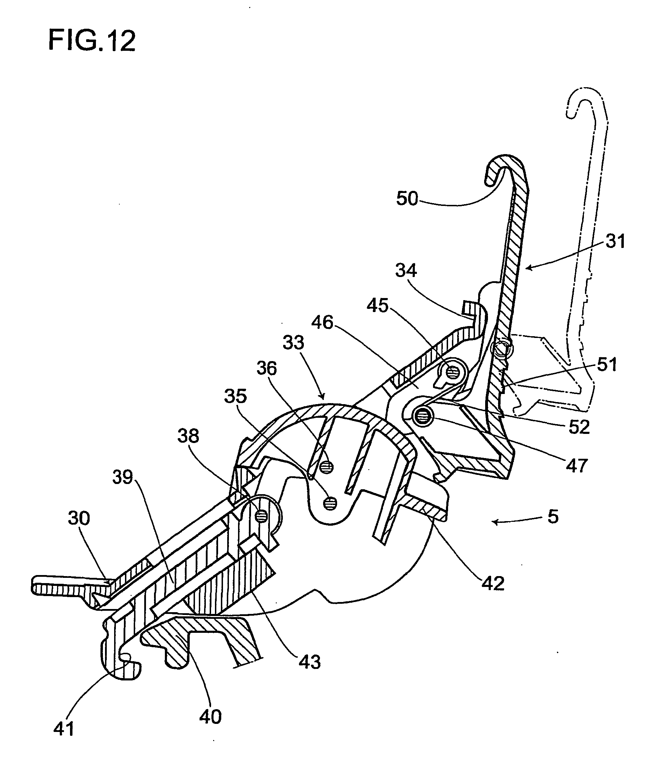

As shown in FIG. 12, when the locked condition is changed to the unlocked condition by the key 56 (shown in FIG. 10(b), the lock lever 33 can rotate about the pivot 35 counterclockwise. As a result, the hook body 39 can be slid downwards and then the storage box 1 can be detached from the carrier 7.

Similarly, the retainer 31 can rotate upward about the third coupling shaft 45 to thereby enable the locking hook 50 and the locking hook receiving portion 10 to disengage from each other, thereby permitting the lid 3 to be opened. At this moment, since the retainer 31 is energized rearwards by the torsion coil spring 52, a user can disengage the locking hook 50 and the locking hook receiving portion 10 from each other only by pushing up a lower end surface of the retainer 31 and hence can easily open the lid 3.

Further, the regulating rib 60 is formed in the lower half 8a of the handle 8 of the base member 2 and thus the tilting position to tilt the retainer 31 rearwards can be regulated. As a result, when a user closes the lid 3 next time to retain the closed condition of the retainer 31, simply siding the slip stopper 51 of the retainer 31 downwards enables the locking hook 50 to engage with the locking hook receiving portion 10. According to the storage box 1, therefore, the regulating rib 60 is provided in the lower half portion 8a of the handle of the base member 2, thus facilitating easier operation of the retainer 31 by a user. Consequently, a user can easily close the lid 3 and allow its closed condition to be retained easily.

### (4) Modifications

The present invention is not limited to the above embodiment.

For example, whilst the number of the tapped holes 17 provided in the reverse side of the cover body 12 is three in the foregoing embodiment, the present invention is not limited thereto. As it suffices if they enable the cover body 12 to be fixed to the upper surface of the lid 3, the number of the tapped holes may be two or four or more.

## Claims

1. A storage box (1) for being mounted on a rearward of a seat on a saddle riding type vehicle, comprising:
a base member (2) with an opening,
a lid (3) for opening and closing the opening,
a hinge (4) for pivotably connecting the lid (3) to the base member (2),
a lock member (5) for holding the lid (3) with the lid (3) having closed the opening, and
a backrest (6) attached to one surface of the lid (3),
**characterized in that**
the storage box (1) is provided with a cover body (12) for covering an upper surface of the lid (3),
the backrest (6) is bonded to the one surface of the lid (3) by using an adhesive member,
the cover body (12) is joined to the backrest (6) at a joining section (16) provided at one end of the cover body (12), while the cover body (12) is fixed to the upper surface of the lid (3).

2. The storage box (1) according to claim 1, **characterized in that** a surface of an upper end of the backrest (6) and an upper surface of a front portion of the cover body (12) are made flush with each other.

3. The storage box (1) according to claim 1, **characterized in that** the lid (3) is formed in an arch shape whose upper surface gets gently convex upwards, and the cover body (12) covers a coupling portion (17,24,18) mechanically coupling the lid (3) and the cover body (12).

4. The storage box (1) according to claim 3, **characterized in that** the coupling portion (17,24,18) includes a tapped hole (17) provided on a reverse side of the cover body (12), a through-hole (24) bored in the lid (3) corresponding to the tapped hole (17), and a tapping screw (18) inserted from a reverse side of the lid (3) to be screwed into the tapped hole (17).

5. The storage box (1) according to claim 1, **characterized in that** the joining section (16) comprises a ridge (16) which engages with an engagement groove (15) formed in the backrest (6).

6. The storage box (1) according to claim 5, **characterized in that** the engagement groove (15) is formed to have an approximately J-shaped profile which is opened upwards.

## Patentansprüche

1. Aufbewahrungskasten (1) zum Anbringen an einer Rückseite eines Sitzes eines Fahrzeugs vom Typ mit Aufsitzsattel, umfassend:
ein Basiselement (2) mit einer Öffnung,
einen Deckel (3) zum Öffnen und Schließen der Öffnung,
ein Gelenk (4) zum schwenkbaren Verbinden des Deckels (3) mit dem Basiselement (2),
ein Sperrelement (5) zum Halten des Deckels (3), wenn der Deckel (3) die Öffnung verschlossen hat, und
eine Rückenlehne (6), die an einer Oberfläche des Deckels (3) angebracht ist,
**dadurch gekennzeichnet, dass**
der Aufbewahrungskasten (1) mit einem Deckkörper (12) zum Abdecken einer Oberseite des Deckels (3) versehen ist,
die Rückenlehne (6) mit einer Oberfläche des Deckels (3) mittels eines Klebelements verbunden ist,
der Deckkörper (12) mit der Rückenlehne (6) an einem Verbindungsabschnitt (16) verbunden ist, der am einen Ende des Deckkörpers (12) vorgesehen ist, während der Deckkörper (12) an der Oberseite des Deckels (3) befestigt ist.

2. Der Aufbewahrungskasten (1) nach Anspruch 1, **dadurch gekennzeichnet, dass** eine Oberfläche eines Oberendes der Rückenlehne (6) und eine Oberseite eines vorderen Abschnitts des Deckkörpers (12) miteinander fluchten.

3. Der Aufbewahrungskasten (1) nach Anspruch 1, **dadurch gekennzeichnet, dass** der Deckel (3) einer Bogenform ausgebildet ist, deren Oberseite leicht konvex nach oben geht, und der Deckkörper (12) einen Kupplungsabschnitt (17, 24, 18) abdeckt, der den Deckel (3) und den Deckkörper (12) mechanisch kuppelt.

4. Der Aufbewahrungskasten (1) nach Anspruch 3, **dadurch gekennzeichnet, dass** der Kupplungsabschnitt (17, 24, 18) ein Gewindeloch (17), das an einer Rückseite des Deckkörpers (12) vorgesehen ist, ein Durchgangsloch (24), das in den Deckel (3) entsprechend dem Gewindeloch (17) gebohrt ist, und eine Gewindeschraube (18), die von einer Rückseite des Deckels (3) zum Einschrauben in das Gewindeloch (17) eingesetzt ist, enthält.

5. Der Aufbewahrungskasten (1) nach Anspruch 1, **dadurch gekennzeichnet, dass** der Verbindungsabschnitt (16) eine Rippe (16) aufweist, die in eine in der Rückenlehne (6) ausgebildete Eingriffsnut (15) eingreift.

6. Der Aufbewahrungskasten nach Anspruch 5, **dadurch gekennzeichnet, dass** die Eingriffsnut (15) so ausgebildet ist, dass sie ein angenähert J-förmiges Profil aufweist, das nach oben offen ist.

## Revendications

1. Boîte de stockage (1) destinée à être montée sur une partie arrière d'un siège sur un véhicule de type à selle, comprenant :
un élément de base (2) avec une ouverture,
un couvercle (3) pour ouvrir et fermer l'ouverture,
une charnière (4) pour raccorder de manière pivotante le couvercle (3) à l'élément de base (2),
un élément de verrouillage (5) pour maintenir le couvercle (3) lorsque le couvercle (3) a fermé l'ouverture, et
un dossier (6) fixé sur une surface du couvercle (3),
**caractérisée en ce que** :
la boîte de stockage (1) est prévue avec un corps de recouvrement (12) pour recouvrir une surface supérieure du couvercle (3),
le dossier (6) est collé à la une surface du couvercle (3) à l'aide d'un élément adhésif,
le corps de recouvrement (12) est assemblé au dossier (6) au niveau d'une section d'assemblage (16) prévue au niveau d'une extrémité du corps de recouvrement (12), alors que le corps de recouvrement (12) est fixé sur la surface supérieure du couvercle (3).

2. Boîte de stockage (1) selon la revendication 1, **caractérisée en ce qu'**une surface d'une extrémité supérieure du dossier (6) et une surface supérieure d'une partie avant du corps de recouvrement (12) sont de niveau l'une par rapport à l'autre.

3. Boîte de stockage (1) selon la revendication 1, **caractérisée en ce que** le couvercle (3) est formé selon une forme d'arc dont la surface supérieure est légèrement convexe vers le haut, et le corps de recouvrement (12) recouvre une partie de couplage (17, 24, 18) couplant mécaniquement le couvercle (3) et le corps de recouvrement (12).

4. Boîte de stockage (1) selon la revendication 3, **caractérisée en ce que** la partie de couplage (17, 24, 18) comprend un trou taraudé (17) prévu sur un côté opposé du corps de recouvrement (12), un trou traversant (24) alésé dans le couvercle (3) correspondant au trou taraudé (17), et une vis taraudeuse (18) insérée à partir d'un côté opposé du couvercle (3) à visser dans le trou taraudé (17).

5. Boîte de stockage (1) selon la revendication 1, **caractérisée en ce que** la section d'assemblage (16) comprend une partie saillante (16) qui se met en prise avec une rainure de mise en prise (15) formée dans le dossier (6).

6. Boîte de stockage (1) selon la revendication 5, **caractérisée en ce que** la rainure de mise en prise (15) est formée pour avoir un profil approximativement en forme de J qui est ouvert vers le haut.
